# EUROPEAN PATENT APPLICATION

(11) **EP 0 735 371 A1**
(43) Date of publication of application: **02.10.1996**
(21) Application number: 96104761.0
(22) Date of filing: 26.03.1996
(51) Int. Cl.: G01P 3/489

(54) **A data acquisition device for use in association with an electronic control unit**

(30) Priority: 28.03.1995 IT TO950235
(71) Applicant: MAGNETI MARELLI S.p.A., I-20145 Milano (IT)
(72) Inventor: Cavallo, Roberto, 10040 Druento, (Torino) (IT); Ferrara, Riccardo, 10073 Cirie', (Torino) (IT); Morello, Gian Luigi, 10146 Torino (IT); Redivo, Paola, 11100 Aosta (IT)
(74) Representative: Quinterno, Giuseppe

(57) **Abstract**

A device (1) for acquisition of pulses (RPM) emitted by a phonic wheel sensor (S,RF) for use in association with the electronic control unit (MP) for managing a vehicle engine, configured to store times, instantaneous speeds and accelerations detected by means of the phonic wheel pulses (RPM) and periodically to transmit them in blocks to the microprocessor of the electronic control unit (MP) in such a way as to avoid the management of data acquisition in real time.

## Description

The present invention refers generally to electronic data acquisition devices associated with internal combustion engines. More specifically the present invention relates to electronic devices for sampling and detecting the instantaneous speed and possibly also the associated acceleration of an internal combustion engine.

As is known, today the majority of internal combustion engines produced for use in vehicles are provided with control devices for managing the fuel injection and/or ignition. Typically these devices are electronic microprocessor control units.

Such control units naturally need information, detected by means of sensors, relating to the operation of the combustion engine with which they are associated in order to be able to perform the functions for which they are intended. Among the main data typically required by the control unit to perform these functions are the instantaneous speed of rotation and the associated acceleration of the combustion engine.

Typically, the instantaneous speed is detected by means of a multi-tooth phonic wheel with which is associated a sensor or pick up of electromagnetic type. The output of the electromagnetic sensor, for example a Hall effect sensor, is connected to an input of the electronic control unit associated with the combustion engine. The passage of each tooth of the phonic wheel past the electromagnetic sensor causes this latter to emit an electric pulse which is received by the electronic control unit. This pulse generates an interrupt for the microprocessor of the electronic control unit which can in this way acquire, by means of a time base of the microprocessor or control unit, a time instant corresponding to the passage of the tooth of the phonic wheel. Starting from the time instants thus acquired the microprocessor of the control unit is naturally able to calculate the speed and instantaneous acceleration of the combustion engine.

This configuration and method of acquisition are widely known in the art and allow the acquisition of the desired information. They are, however, not free from disadvantages.

In fact, in the detection system just described an interrupt for the microprocessor of the control unit is generated upon the passage of each tooth of the phonic wheel, that is to say with a rather high frequency. Upon receiving the interrupt the microprocessor thus suspends the processing which had been in progress, stores the instant of reception of the interrupt and, possibly, even if this information is normally not needed in real time, performs the processing necessary to calculate instantaneous speed and acceleration. All this means that the resources of the microprocessor are managed in an inefficient manner in that a part of the time is expended in serving the frequent interrupts of the phonic wheel sensor.

The object of the present invention is that of providing an acquisition device which allows the above-indicated problems to be resolved in a satisfactory manner.

According to the present invention this object is achieved by an acquisition device having the characteristics indicated in the claims which follow the present description.

Further advantages and characteristics of the present invention will become evident from the following detailed description given with the aid of the attached drawings, provided by way of non limitative example, in which:
Figure 1 is a block schematic diagram of an embodiment of a system using a device according to the present invention; and
Figure 2 is a block schematic diagram of a portion of the system of Figure 1.

The present invention essentially comprises a device outside the microprocessor of the control unit dedicated to the acquisition of signals coming from the phonic wheel. This device is able to manage a large number of asynchronous samplings in real time without tying up the resources of the microprocessor and therefore without affecting its calculation performance.

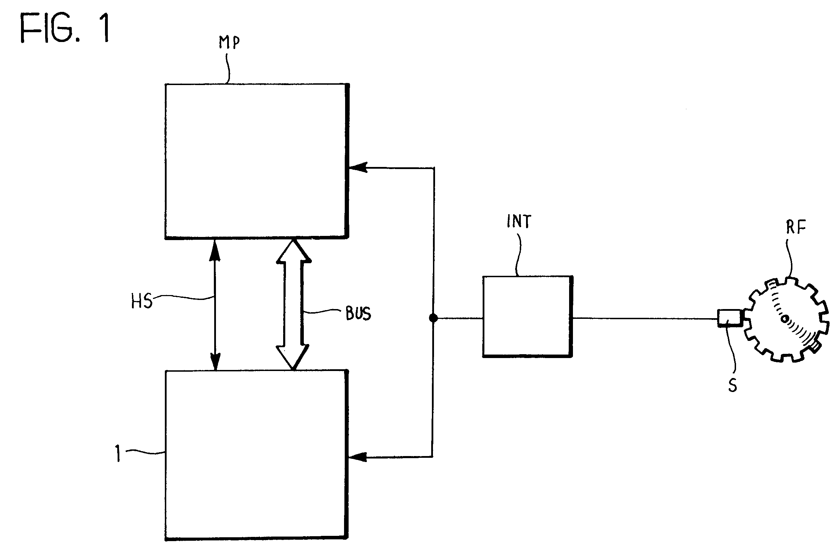

For a better understanding an embodiment of the device according to the present invention will now be described with reference to Figure 1. In Figure there is shown a phonic wheel RF with an associated electromagnetic sensor S. The signals emitted by the sensor S are sent to an interface INT which is arranged to perform the necessary impedance and voltage level adaptations as is widely known in the art.

The interface INT in turn sends the signals generated by the sensor S both to the microprocessor MP and to a device 1 according to the present invention. The microprocessor MP and the device 1 can both be conveniently housed in the electronic control unit intended for the management of the combustion engine with which the phonic wheel RF is associated.

From the point of view of the internal processing architecture of the electronic control unit the device 1 according to the present invention is seen by the microprocessor MP as a normal peripheral. Therefore the microprocessor MP and the device 1 are, for communication purposes, interconnected by a communication channel BUS also known in the art as address/data bus, via which memory addresses and data are transmitted, and by a certain number of conductors indicated HS in the drawing, dedicated to the transmission of control signals. This architecture, and the processes which govern communication between the microprocessor MP and the device 1, are well known in the art and will therefore not be described further in detail. In this way it is possible to have available an instantaneous speed (and associated acceleration) sampling and detection device for sampling and detecting the instantaneous speed (and associated acceleration) of the engine with the greatest possible definition. This definition in practice is given by the number of teeth of the phonic wheel RF, for example 60-2 or 135 teeth. All this with a minimum possible engagement use of the microprocessor MP which is thus left only the task of processing the collected data. This processing allows the microprocessor MP, for example, to calculate the torque of the combustion engine or to detect misfiring thanks also to the significant quantity of data thus available concerning developments in the speed of rotation of the engine.

As is mentioned above, the signal emitted by the sensor S is sent both to the device 1 and to the microprocessor MP. This occurs in that the microprocessor MP needs in any event to receive this signal for the conventional management of the combustion engine for example for detecting the top dead centre point for controlling the ignition advance. The device 1 on the other hand acquires all the phonic wheel signals emitted by the sensor S and stores them, together with the instantaneous speed and acceleration of the engine which it calculates, in a temporary memory or buffer.

All the data thus stored by the device 1 are then periodically transmitted to the microprocessor MP independently of the real time management of the engine performed by the microprocessor MP. In this way, by means of the block transfer of stored data at periodic intervals, the engagement time of microprocessor MP is very much reduced.

The microprocessor MP and the device 1 can moreover exchange information relating to the amount of collected data, and to synchronisation of the data with respect to the angular position of the engine, by means of the control signals exchanged via the dedicated conductors HS.

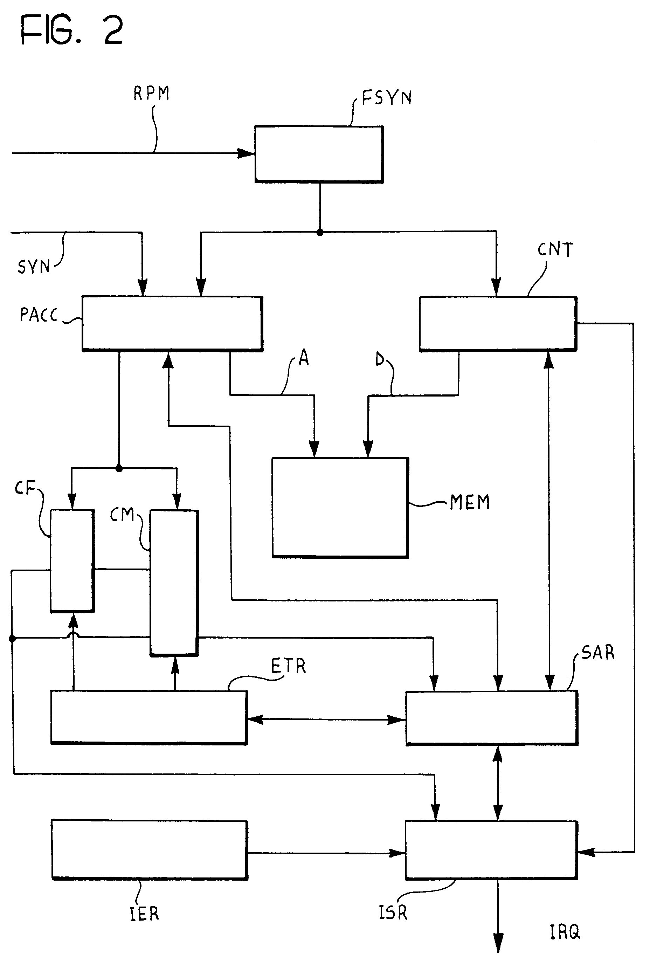

The device 1 will now be described in more detail with reference to Figure 2. The phonic wheel's signal, received by the sensor S, is indicated RPM. The acquisition of the times of the pulses of the signal RPM by the device 1 is based on a 16 bit counter CNT. The counter CNT naturally receives a time base signal, or clock (not illustrated) possibly selectable by means of a frequency divider or pre scaler (not illustrated) which serves to provide the time reference.

The counter CNT therefore receives the signal RPM from the phonic wheel pre-treated by a filtering module FSYN which converts it into a logic signal. When an RPM signal pulse is received the content of the counter CNT is acquired and represent the time instant at which the RPM signal pulse occurred. In practice this is achieved by storing the content of the counter CNT in a location of a buffer memory MEM, typically a RAM memory connected to the counter CNT by a data bus D. Naturally, in order to prevent the content of the counter CNT from becoming written into the same memory location it is necessary to modify the writing address provided to the buffer memory MEM, when each RPM signal pulse is received.

To this end there is provided a pulse accumulator module PACC which generates the addresses of the memory locations in which the content of the counter CNT is stored from time to time and is connected to the buffer memory MEM by means of an address bus A. The pulse accumulator module PACC also receives the RPM signal since, as has been mentioned above, it acts to modify the write memory address at each pulse received on the signal RPM.

The pulse accumulator module PACC also receives a signal SYN which enables updating of the memory addresses and therefore, in practice, enables acquisition of data by the device 1. The enablement signal SYN is generated by the microprocessor MP and is transmitted by the dedicated conductors HS.

The buffer memory MEM can for example conveniently be managed as a circular buffer. This is to say that the pulse accumulator module PACC increments by one the memory address provided to the buffer memory MEM upon reception of each pulse of the RPM signal, zeroing it when it exceeds the address of the last location in the buffer memory MEM. In this way all the locations of the buffer memory MEM are filled cyclically with the values provided by the counter CNT. The necessity for periodically transferring blocks of data stored in the buffer memory MEM to the microprocessor MP in such a way as to avoid loss of acquired data is therefore evident.

To this end the pulse accumulator module PACC sends information relating to the memory address currently in use to a pair of comparator modules CF and CM.

Thus, by adopting a strategy which simplifies the management of communication between the microprocessor MP and the device 1, the buffer memory MEM can be logically sub divided into two portions. In this way when the device 1 is engaged in storing data in the first portion of the buffer memory MEM, transfer of data stored in the second portion to the microprocessor MP is enabled. On the other hand, when the device 1 is engaged in storing data in the second portion of the buffer memory MEM, transfer to the microprocessor MP of data stored in the first portion is enabled.

The two comparator modules CF and CM therefore serve to signal the beginning of the storage of data in a first and a second portion of the buffer memory MEM. The two comparator modules CF and CM are therefore connected to a group of state registers for controlling communication with the microprocessor MP. These registers are: an event time register ETR, a status/action register SAR, an interrupt enablement register IER, and an interrupt status register ISR connected as illustrated in the drawings.

In a possible embodiment, for example, the register ISR can send to the microprocessor MP a signal IRQ to request an interrupt when transfer of a block of data from the device 1 to the microprocessor MP becomes necessary. When the microprocessor MP receives an interrupt request it therefore arranges, as soon as the real time management allows it, to satisfy this interrupt request by transferring a portion of the buffer memory MEM. The interrupt request signal IRQ is a control signal and therefore as such is transmitted via the conductors HS.

Other strategies for managing the communication between the microprocessor MP and the device 1 are naturally possible as alternatives or in combination with that just described. For example in a possible embodiment the content of the accumulator module PACC and the registers ETR, SAR, IER and ISR can be read (and possibly also written) by the microprocessor MP which can therefore in this way take control of the transfer of data from the device 1.

Naturally, the principle of the invention remaining the same, the details of construction and the embodiments can be widely varied with respect to what has been described and illustrated, without by this departing from the ambit of the present invention.

## Claims

1. An acquisition device (1) capable of being used in association with an electronic control unit (MP) for a combustion engine, to detect data (RPM) relating to the operation of the said combustion engine needed by the said electronic control unit (MP), characterised in that:
it is operatively connected to sensor means (S, RF) operable to generate the said data (RPM) needed by the said electronic control unit (MP),
it includes memory means (MEM) operable to store a plurality of the said data (RPM) generated by the said sensor means (S, RF),
it is operatively connected to the said electronic control unit (MP),
it is configured in such a way as periodically to perform the following operations:
detect the said data (RPM) generated by the said sensor means (S, RF) and store them in the said memory means (MEM),
periodically transfer at least a portion of the said plurality of data (RPM) stored in the said memory means (MEM) to the said electronic control unit (MP).

2. A device (1) according to Claim 1, in which the said data (RPM) relating to the operation of the said combustion engine are data relating to the speed of rotation of the said combustion engine, characterised in that the said memory means include a buffer memory (MEM) of the read and write type in which the storage of said data (RPM) takes place in a circular manner.

3. A device (1) according to Claim 2, characterised in that the said buffer memory (MEM) includes at least a first and second portion and in that:
during storage of the said data (RPM) in the said first portion transfer of data (RPM) stored in the said second portion to the said electronic control unit (MP) is enabled,
during storage of the said data (RPM) in the said second portion transfer of the data (RPM) stored in the said first portion to the said electronic control unit (MP) is enabled.

4. A device (1) according to Claim 2 or Claim 3, in which the said data relating to the speed of rotation of the said combustion engine comprises pulses (RPM) emitted by a phonic wheel sensor (S, RF) associated with the said combustion engine, characterised in that it includes a circuit operable to generate a time base signal and is configured to detect the time instants at which the said pulses (RPM) are received.

5. A device (1) according to Claim 4, characterised in that it includes a counter circuit (CNT) operatively connected to the said buffer memory (MEM) and receiving the said time base signal at its input, configured in such a way as to store its content in a location of the said buffer memory (MEM) upon reception of the said pulses (RPM).

6. A device (1) according to any of Claims from 1 to 5, characterised in that the said transfer of the said data (RPM) to the said electronic control unit (MP) is activated by an interrupt signal sent from the said device (1) to the said electronic control unit (MP).

7. A device (1) according to Claim 6, characterised in that the said interrupt signal is sent when the said buffer memory (MEM) has stored a predetermined number of said signals (RPM) to be transferred to the said electronic control unit (MP).

8. A device (1) according to any of Claims from 1 to 7, characterised in that the said transfer of the said data (RPM) to the said electronic control unit (MP) is activated by the said electronic control unit (MP) in a management mode of the interrogation type.

9. A device (1) according to any of Claims from 4 to 8, characterised in that it is configured to:
calculate data indicative of the speed of rotation of the said combustion engine on the basis of the said phonic wheel pulses (RPM),
store said data indicative of the speed of rotation in the said buffer memory (MEM) and subsequently transfer it to the said electronic control unit (MP).

10. A device (1) according to any of Claims from 4 to 9, characterised in that it is configured to:
calculate data indicative of the acceleration of the said combustion engine on the basis of the said phonic wheel pulses (RPM),
store the said data indicative of the acceleration in the said buffer memory (MEM) and subsequently transfer it to the said electronic control unit (MP).
